# NEUE EUROPÄISCHE PATENTSCHRIFT

(11) **EP 2 758 700 B2**
(45) Veröffentlichungstag und Bekanntmachung des Hinweises auf die Entscheidung über den Einspruch: **23.01.2019**
(45) Hinweis auf die Patenterteilung: 09.12.2015
(21) Anmeldenummer: 12766033.0
(22) Anmeldetag: 17.09.2012
(51) Int. Cl.: F16L 21/04, F16L 21/08, F16L 47/12, B22F 3/22, B22F 1/00

(54) **ROHRVERBINDUNGSVORRICHTUNG UND VERFAHREN ZU DEREN HERSTELLUNG**
PIPE CONNECTING DEVICE AND METHOD FOR PRODUCTION THEREOF
DISPOSITIF DE RACCORDEMENT TUBULAIRE ET PROCÉDÉ DE FABRICATION CORRESPONDANT

(30) Priorität: 19.09.2011 AT 13432011
(43) Veröffentlichungstag der Anmeldung: 30.07.2014
(73) Patentinhaber: E. Hawle Armaturenwerke GmbH, 4840 Vöcklabruck (AT)
(72) Erfinder: LEHNER, Franz, 4800 Pühret (AT); FÜHRER, Gerhard, 4870 Pfaffing (AT)
(74) Vertreter: Puchberger & Partner Patentanwälte
(86) Internationale Anmeldenummer: PCT/EP2012/068256
(87) Internationale Veröffentlichungsnummer: WO 2013/041491

(56) Entgegenhaltungen:
- EP-A1- 0 235 818
- EP-A1- 0 537 711
- EP-A1- 0 612 947
- EP-A1- 0 638 754
- EP-A2- 1 184 108
- EP-A2- 1 881 314
- EP-A2- 2 090 815
- WO-A1-99/20421
- WO-A1-2009/157766
- DE-A1- 2 302 771
- DE-A1- 4 430 130
- DE-A1- 10 157 304
- ES-U- 1 058 780
- ES-U- 1 061 896
- US-A- 5 335 946
- US-A1- 2002 131 886
- AUSDRUCK DER INTERNETSEITE DES UNTERNEMENS DüKER VOM 6. SEPTEMBER 2009
- TECHNISCHE ZEICHNUNG DES BAUTEILSEGMENTS DüKER MJ VOM 5. OKTOBER 2005
- AUSDRUCK DER INTERNETSEITE DER ZIMMER GROUP
- PROSPEKT DER ZIMMER GMBH KUNSTSTOFFTECHNIK AUS DEM JAHR 2009
- INFORMATIONSPROSPEKT ZUR MIM-TECHNOLOGIE AUS DEM JAHR 2009
- ANGEBOT P11/000015 VOM 27. JANUAR 2011
- ANGEBOT P11/000028 VOM 14. FEBRUAR 2011
- ANGEBOT P11/000032 VOM 17. FEBRUAR 2011
- ANGEBOT P11/000116 VOM 14. NOVEMBER 2011

## Beschreibung

Die Erfindung betrifft eine Rohrverbindungsvorrichtung für eine auszugssichere und dichtende Verbindung eines Einsteckendes mit einer Muffe, wobei die Rohrverbindungsvorrichtung einen im Wesentlichen geschlossenen Klemmring umfasst, der einen variablen Umfang aufweist und aus mehreren relativ zueinander beweglich angeordneten Gliedern zusammengesetzt ist, die über Krafteinleitungsmittel mit einer Spannkraft gegen das Einsteckende pressbar sind,
wobei an zumindest einem Glied ein Sicherungselement vorgesehen ist, welches Richtung Einsteckende gerichtete Zähne aufweist, die jeweils eine Basis, eine erste Zahnflanke, eine zweite Zahnflanke und eine Spitze aufweisen.
Ferner betrifft die Erfindung ein Verfahren zur Herstellung einer Rohrverbindungseinrichtung.

Rohrverbindungsvorrichtungen, die einen im Wesentlichen geschlossenen Klemmring umfassen sind seit längerer Zeit bekannt und in unterschiedlichen Ausführungsformen publiziert.

So offenbart Dokument EP 2 090 815 A2 eine Rohrverbindungseinrichtung nach dem Oberbegriff von Anspruch 1.

Beispielsweise sind Rohrverbindungsvorrichtungen bekannt, die eingerichtet sind, um eine dichtende Verbindung eines Einsteckendes mit einer Muffe herzustellen. Insbesondere bei nachträglichen Reparaturarbeiten von Wasserrohren ist nur der Innendurchmesser des Rohres bekannt. In vielen Fällen ist jedoch der Rohrwerkstoff nicht bekannt. Dieser Werkstoff hat einerseits Einfluss auf den Außendurchmesser des verlegten Rohres und andererseits auf die Möglichkeit der Anbindung einer Rohrverbindungsvorrichtung. So sind beispielsweise Kunststoffrohre aus einem weniger festen Material gebildet als Rohre aus Gusseisen. Um nun die selbe Beständigkeit wie bei Gusseisenrohren zu erreichen, weisen Kunststoffrohre einen größeren Außendurchmesser auf. Darüber hinaus muss bei der Anbindung an Kunststoffrohre auch die geringere Härte und die geringere Scherfestigkeit des Kunststoffmaterials berücksichtigt werden. Um dieser Herausforderung zu begegnen, sind sogenannte Mehrbereichskupplungen im Einsatz. Diese Mehrbereichskupplungen umfassen einen Klemmring, der aus einer Vielzahl von Gliedern zusammengesetzt ist, die relativ zu einander beweglich angeordnet sind. Durch diese Relativbewegung kann der Durchmesser des Klemmrings variiert werden. Diese Variationsmöglichkeit des Durchmessers ermöglicht in weiterer Folge eine flexible Anpassung der Rohrverbindungsvorrichtung an unterschiedliche Außendurchmesser.

Insbesondere bei mediumführenden Rohren wie beispielsweise Gasleitungen und Wasserleitungen aber auch bei Pipelines etc. weist das Medium gegebenenfalls einen gewissen Überdruck auf. Bei derartigen Rohrsystemen kann es von Vorteil sein, die Verbindung zwischen der Muffe und dem Einsteckende auszugssicher auszugestalten. Eine auszugssichere Rohrverbindung soll verhindern, dass das Einsteckende aus der Muffe gezogen werden kann. Dazu ist es notwendig Mittel vorzusehen, welche einerseits einen Kraft- oder Formschluss mit dem Einsteckende und andererseits einen Kraft- oder Formschluss mit der Muffe bewirken. Zu diesem Zweck werden, dem Stand der Technik entsprechend, am Klemmring Zähne vorgesehen, welche sich Richtung Einsteckende erstrecken und die Reibung bzw. die Haftung zwischen dem Klemmring und dem Einsteckende verbessern. Die Geometrie dieser Zähne ist einerseits von den zu erwartenden Auszugskräften und andererseits von den Festigkeitswerten der Rohrwerkstoffe abhängig. In der Praxis wird diese Anpassung beispielsweise durch Einsetzen unterschiedlicher Zähne in den Klemmring je nach Rohrwerkstoff erreicht. Nachteilig am Stand der Technik ist, dass die Mittel zur Erreichung der Auszugssicherung unflexibel, teuer in der Herstellung sowie umständlich und zeitintensiv in der Handhabung sind. Darüber hinaus ist die Auszugssicherung durch die dem Stand der Technik entsprechenden Auszugssicherungen nicht ausreichend gegeben.

Aufgabe der vorliegenden Erfindung ist es nun eine Rohrverbindungsvorrichtung für eine auszugssichere und dichtende Verbindung eines Einsteckendes mit einer Muffe zu schaffen, die die Nachteile des Standes der Technik überwindet und darüber hinaus günstig in der Herstellung, flexibel in der Anwendung, unkompliziert in der Anwendung und widerstandsfähig gegen Umwelteinflüsse und Verschleiß ist. Darüber hinaus ist es eine weitere Aufgabe der Erfindung, dass die Auszugssicherung für unterschiedliche Kräftebereiche, Werkstoffe und Dimensionen der Rohre gegeben ist.

Eine weitere Aufgabe der vorliegenden Erfindung ist es ein Verfahren zur Herstellung einer Rohrverbindungsvorrichtung zu schaffen, welches günstig und effizient ist und dabei die hohen Anforderungen an die Genauigkeit der Geometrie der maßgeblichen Teile für die Auszugssicherung erfüllen kann.

Die erfindungsgemäßen Aufgaben werden durch eine Rohrverbindungsvorrichtung gemäß Anspruch 1 und ein Verfahren gemäß Anspruch 13 gelöst. Der Zahn ist insbesondere in Auszugsrichtung im Bereich der Basis breiter ausgeführt ist als im Bereich der Spitze.

Erfindungsgemäß ist weiters vorgesehen, dass das Sicherungselement zumindest einen Hauptzahn und zumindest einen Nebenzahn aufweist wobei der Hauptzahn den Nebenzahn Richtung Einsteckende überragt. Weiters kann vorgesehen sein, dass das Sicherungselement einen Grundkörper umfasst von welchem sich die Zähne, insbesondere ein Hauptzahn und ein Nebenzahn Richtung Einsteckende erheben, dass der Hauptzahn und der Nebenzahn durch einen Grundkörper verbunden sind und/oder dass der Grundkörper zwischen dem Hauptzahn und dem Nebenzahn eine durchgehende und/oder unterbrechungsfreie Form aufweist, die im Wesentlichen frei von Durchgangsöffnungen und/oder Einschnitten ist.

Weiters kann vorgesehen sein, dass die Zähne jeweils eine Spitze aufweisen, die eingerichtet ist um ein Eindringen in das Einsteckende unter der Spannkraft zu ermöglichen, dass der Hauptzahn gegen die Auszugskraft geneigt ist und eine Hinterschneidung aufweist, dass der Hauptzahn eine erste Hauptzahnflanke aufweist deren Winkel kleiner ist als 90°, dass die Zähne einen im Wesentlichen dreiecksförmigen Querschnitt aufweisen, der von der Basis, der ersten Zahnflanke, der zweiten Zahnflanke und der Spitze begrenzt ist und/oder dass der Hauptzahn und die Nebenzähne im Bereich der Basis breiter ausgeführt sind als im Bereich der Spitze. Der Zahn ist insbesondere in Auszugsrichtung im Bereich der Basis breiter ausgeführt ist als im Bereich der Spitze.

Weitere vorteilhafte Merkmale sind, dass bei zumindest einem Zahn die Spitze die Basis gegen die Auszugsrichtung überragt, dass an jedem Glied der Rohrverbindungsvorrichtung ein Sicherungselement vorgesehen ist, dass das Sicherungselement einstückig bevorzugt aus Metall ausgeführt ist und/oder dass das Sicherungselement aus Metall insbesondere aus korrosionsbeständigem, härtbarem und/oder gehärtetem Stahl gebildet ist.

Ferner sind die erfindungsgemäßen Aufgaben durch das Verfahren zur Herstellung einer Rohrverbindungsvorrichtung gelöst, wobei das Sicherungselement derart hergestellt wird, dass die Masse nahe dem Schmelzpunkt der, die Metallbestandteile umfassenden Metallverbindung zu einem metallischen Körper verarbeitet wird, dass die Form entlang einer Formteilungslinie geteilt und öffenbar ist und/oder dass der Hohlraum der Form bezüglich der Formteilungslinie frei von Hinterschneidungen ist.

Zur Lösung der erfindungsgemäßen Aufgaben ist insbesondere auf die geometrische und festigkeitstechnische Ausgestaltung des Sicherungselements sowie der umliegenden Teile zu achten. Folgende Punkte werden gesondert herausgestrichen: Eine kritische Stelle für die Auszugssicherheit stellt der Berührbereich des Einsteckendes mit dem Sicherungselement dar. Zur Verbesserung des Kraft- und/oder Formschlusses zwischen dem Einsteckende und dem Sicherungselement sind erfindungsgemäße Zähne vorgesehen. Diese werden durch die Spannkraft S gegen und/oder in das Einsteckende gedrückt. Bei weichen Rohren wie beispielsweise bei Kunststoffrohren aus PVC sind die Zähne durch die Spannkraft verhältnismäßig tief in die Oberfläche des Einsteckendes gedrückt. Um ein Abscheren des Rohrmaterials, welches zwischen den Zähnen Richtung Grundkörper des Sicherungselements ragt zu verhindern, muss der Abstand zwischen den Zähnen groß genug gewählt werden. Dieser Abstand bewirkt, dass die Fläche auf der Außenseite des Einsteckendes, die zwischen den Zähnen auf Scherung beansprucht wird ausreichend groß ist, um den Auszugskräften Stand zu halten. Ein weiteres Merkmal, das die Gefahr des Abscherens des Rohrmaterials verringert, ist die geneigte Ausführung des Hauptzahnes. Dieser, insbesondere dessen erste Hauptzahnflanke, ist gegen die Auszugsrichtung geneigt und weist eine Hinterschneidung auf. Eine Relativverschiebung des eingedrückten Zahnes gegenüber dem Einsteckende bewirkt somit ein weiteres, tieferes Eintauchen des Zahnes in das Rohrmaterial.

Bei verhältnismäßig harten Rohren aus beispielsweise Gusseisen ist die Spannkraft meist nicht ausreichend um die Zähne tief in das Rohrmaterial eindringen zu lassen. Maßgeblich beeinflusst wird die Eindringneigung der Zähne in die Rohroberfläche durch den Druck, der maßgeblich von der Spannkraft und der Auflagerfläche der Zähne auf der Rohroberfläche bestimmt ist. Bei gleichbleibender Spannkraft kann somit der Druck und/oder die Flächenpressung durch Vorsehen einer geringeren Auflagefläche erhöht werden. Bei der vorliegenden Ausführung überragt der Hauptzahn die bzw. den Nebenzahn Richtung Einsteckende. Dies hat zurfolge, dass beim Spannen der Rohrverbindungsvorrichtung zuerst die Spitze des Hauptzahnes mit der Oberfläche des Einsteckendes in Berührung kommt. Bei einem möglichen Aufkanten des Sicherungselementes kommt ein weiterer Zahn, insbesondere der Nebenzahn des selben Sicherungselements, welcher am weitesten vom Hauptzahn entfernt ist zu einer Anlage mit dem Einsteckende. Durch diese Anlage eines bzw. eines zweiten Zahnes ist die Auflagefläche des Sicherungselements geringer, was bei ausreichender Spannkraft zu einem Eindringen zumindest des Hauptzahnes in die Oberfläche des Einsteckendes bewirkt. Neben dem Formschluss durch die in das Einsteckende ragenden Zähne ist der Reibschluss durch Aufliegen der Nebenzähne auf der Oberfläche des Einsteckendes für die Auszugssicherung geeignet. Ferner wird die Auflagefläche durch den Radius der Spitze der Zähne bestimmt. Je spitzer der Zahn ist, desto kleiner ist die Fläche und desto größer ist bei konstanter Spannkraft die Flächenpressung. Begrenzt ist dieser Radius durch fertigungstechnische bzw. durch wirtschaftliche Faktoren.

Die Zähne erheben sich von dem Grundkörper Richtung Einsteckenede und weisen im Bereich des Grundkörpers eine Basis auf. Der Zahn ist im Bereich der Basis in bevorzugter Weise breiter ausgeführt als im Bereich der Spitze. Verbunden sind die Spitze und die Basis im Wesentlichen durch eine erste Zahnflanke und eine zweite Zahnflanke. Diese Flanken verlaufen in bevorzugter Weise nicht parallel sondern weisen einen gewissen Öffnungswinkel auf. Der Öffnungswinkel ist somit ungleich 0°. Die Zähne haben einen im Wesentlichen dreiecksförmigen Querschnitt der durch die Spitze, die Zahnflanken und die Basis begrenzt ist. Die Betrachtung der Zahngeometrie bezieht sich insbesondere auf eine Ebene, in der die Mittelachse des Einsteckendes verläuft oder die eine Gerade umfasst, welche im Wesentlichen parallel zur Mittelachse oder zur Auszugsrichtung verläuft. Ferner steht die Ebene im Wesentlichen normal auf eine Tangentialebene des Einsteckendes im Bereich der Berührungsstelle des betrachten Sicherungselements mit dem Einsteckende. Diese Ebene entspricht beispielsweise den Darstellungsebenen der nachfolgenden Figuren oder der Ebene die im Wesentlichen von den Vektoren der Auszugskraft und der Spannkraft aufgespannt ist oder diese Vektoren umfasst.

Ein weiterer festigkeitstechnischer Aspekt, der durch erfindungsgemäße Merkmale gelöst ist, ist die Verbindung der einzelnen Zähne untereinander. So ist ein Grundkörper vorgesehen von welchem sich die Zähne Richtung Einsteckende erheben. Der Grundkörper ist durch Zugkräfte, Biegekräfte, Druckkräfte und Scherkräfte etc. einem komplexen Spannungszustand ausgesetzt. Um diesen Spannungen standzuhalten weist der Grundkörper eine optimierte Form auf, weiche den Bruch desselben verhindert. Um Kerbwirkungen oder Schwächungsstellen zu vermeiden, ist der Grundkörper in bevorzugter Weise als durchgehender Körper ausgebildet. Dieser ist insbesondere frei von Öffnungen.

Den hohen Anforderungen an die exakte geometrische Ausgestaltung des Sicherungselements gerecht zu werden und dabei dennoch eine wirtschaftlich vertretbare Rohrverbindungsvorrichtung zu ermöglichen sind Aufgaben, die durch das erfindungsgemäße Herstellungsverfahren gelöst sind. Dieses ermöglicht die Herstellung des Sicherungselements in einem einzigen Arbeitsverfahren, ohne dabei beispielsweise die Kanten, Zahnflanken, den Grundkörper etc. in weiteren Arbeitsschritten z.B. spanabhebend weiterbearbeiten zu müssen. Erst durch die hohe Herstellungsgenauigkeit bei geringen Kosten ist eine wirtschaftliche Herstellung der erfindungsgemäßen Rohrverbindungsvorrichtung möglich.

In weiterer Folge wird die Erfindung anhand mehrerer Ausführungsbeispiele näher beschrieben.
Fig. 1 zeigt eine schematische Darstellung einer Ausführungsform einer erfindungsgemäßen Rohrverbindungsvorrichtung.
Fig. 2 zeigt eine detaillierte Schnittdarstellung einer möglichen Ausführungsform der erfindungsgemäßen Rohrverbindungsvorrichtung.
Fig. 3 zeigt eine Ansicht eines erfindungsgemäßen Gliedes.
Fig. 4 zeigt dieselbe Ausgestaltung wie Fig. 3 jedoch in einer Schrägansicht
Fig. 5 zeigt das Detail eines Sicherungselements
Fig. 6 zeigt eine weitere Ausführungsform eines Gliedes
Fig. 7 zeigt eine detaillierte Ansicht des Profils des Sicherungselements
Fig. 8 zeigt eine weitere Ausführungsform eines erfindungsgemäßen Gliedes
Fig. 9 zeigt das selbe Glied 3 wie Fig. 8.
Fig. 10 zeigt eine Detailansicht des Profils des Sicherungselements der Figuren 8 und 9.
   Die Figuren 11, 12, 13 und 14 zeigen Schrägansichten weiterer Ausführungsformen erfindungsgemäßer Sicherungselemente.

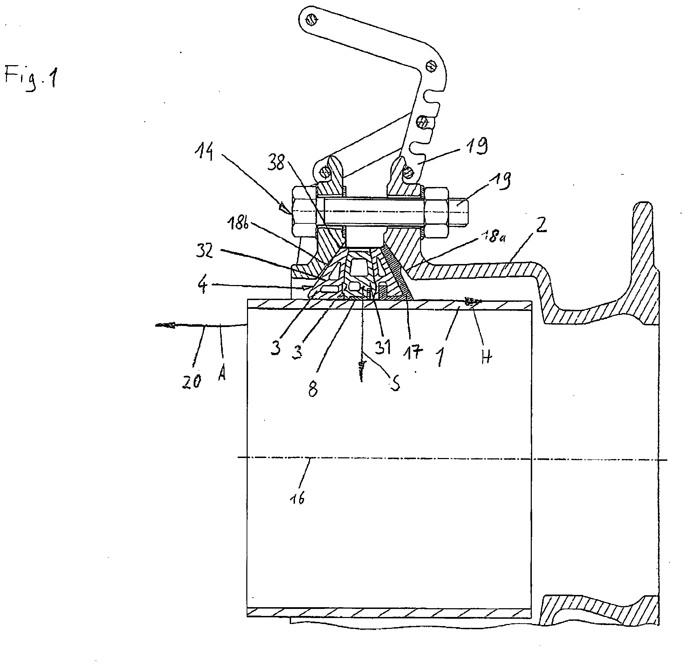

Fig. 1 zeigt eine schematische Darstellung einer Ausführungsform einer erfindungsgemäßen Rohrverbindungsvorrichtung. Zur Verbindung eines Einsteckendes 1 mit einer Muffe 2 ist ein im Wesentlichen ringförmig ausgebildeter Klemmring 4 vorgesehen. Der Klemmring ist aus mehreren, relativ zueinander bewegbaren, Gliedern 3 zusammengesetzt. Der Klemmring 4 weist in der dargestellten Ausführung eine konische Form auf, die derart ausgestaltet ist, dass die Breite (parallel zur Mittelachse 16 des Einsteckendes gemessen) mit steigendem Abstand zur Mittelachse 16 kleiner wird. Ferner ist der Klemmring, der in bevorzugter Weise einen variablen Umfang bzw. einen variablen Durchmesser aufweist, durch Krafteinleitungsmittel 14 gegen das Einsteckende gedrückt. In der vorliegenden Ausführung sind die Krafteinleitungsmittel unter anderem durch zwei Kegelflächen 18a und 18b sowie zwei Spannelemente 19 gebildet. Durch Betätigung der Spannelemente 19 werden die beiden Kegelflächen 18 zueinander gezogen, wodurch der Abstand zwischen den beiden Kegelflächen 18 verringert wird. Durch die Verringerung des Abstandes wird der Klemmring, insbesondere die Glieder 3 des Klemmrings 4 gegen das Einsteckende 1 gedrückt. Bei der Bewegung der Glieder 3 Richtung Einsteckende 1 verringert sich der Durchmesser des gesamten Klemmrings. Dies ist durch eine Relativbewegung der Glieder 3 des Klemmrings 4 zueinander ermöglicht. An der, der Muffe zugewandten Seite des Klemmrings ist ein Dichtelement 17 vorgesehen. Dieses berührt in eingesetzter Stellung sowohl das Einsteckende 17 als auch die muffenseitige Kegelfläche 18a. Durch die umlaufende Berührung und Quetschung des Dichtelementes entlang des gesamten Umfanges des Einsteckendes und des gesamten Umfanges der muffenseitigen Kegelfläche 18a ist eine dichtende Verbindung der beiden zu verbindenden Elemente (Einsteckende und Muffe) gegeben.

Um nun eine Verbindung zwischen dem Einsteckende und der Muffe herzustellen, wird das Einsteckende durch den Klemmring hindurch in die Muffe eingeführt. In einem weiteren Schritt wird über die Krafteinleitungsmittel 14, insbesondere die beiden Kegelflächen 18, welche über Spannelemente 19 zueinander gezogen werden, der Klemmring einerseits gegen die muffenseitige Kegelfläche 18a und andererseits gegen die äußere Oberfläche des Einsteckendes gedrückt. Durch die Einleitung und Aufbringung von Kräften kommt es zwischen dem Klemmring und dem Einsteckende 1 zu Reib- und/oder Formschluss. Die Verbindung des Klemmrings zur Muffe geschieht insbesondere über Formschluss- und/oder gegebenenfalls Reibschluss zwischen den Kegelflächen 18 und dem Klemmring.

Weitere Kräfte sind beispielsweise durch eine Auszugskraft gegeben. Bei mediumführenden Rohren, die einen gewissen Überdruck aufweisen oder auch durch thermische Längenänderungen der Rohrsysteme ist es vonnöten, ein Ausziehen des Einsteckendes aus der Muffe zu verhindern. Die Auszugskraft 20 wirkt entlang des eingezeichneten Vektors, insbesondere entlang oder parallel zur Mittelachse 16. Durch die Auszugskraft und den Reib- und/oder Formschluss des Klemmrings mit dem Einsteckende wird der Klemmring an die öffnungsseitige Kegelfläche 18b gezogen. Durch die kegelige Ausgestaltung ist die Auszugskraft 20 auf den Klemmring, insbesondere die Glieder 3 des Klemmrings übertragen und Richtung Einsteckende 1 geleitet. Somit bewirkt eine Auszugskraft A eine weitere Spannkraft S. Diese erhöhte Spannkraft resultiert wiederum in einer größeren Haltekraft H und somit besserem Kraft- und/oder Formschluss zwischen dem Klemmring und dem Einsteckende 1.

Zur weiteren Verbesserung der Verbindung ist ein Sicherungselement 8 vorgesehen. Dieses ist an zumindest einem Glied 3 des Klemmrings 4 vorgesehen. In bevorzugter Weise ist es an der, dem Einsteckende 1 zugewandten Seite des Klemmrings und an mehreren Gliedern 3 vorgesehen.

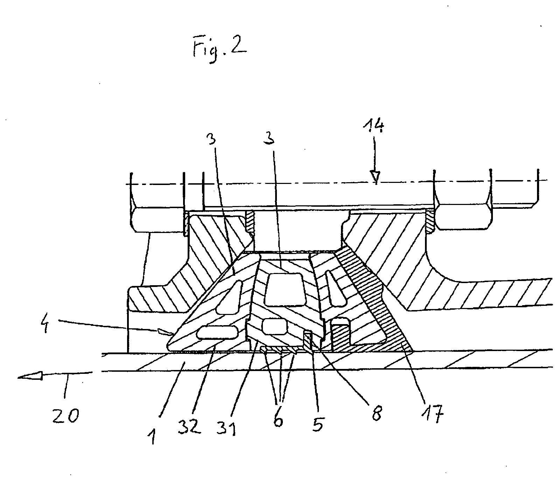

Fig. 2 zeigt eine detaillierte Schnittdarstellung einer möglichen Ausführungsform der erfindungsgemäßen Rohrverbindungsvorrichtung. Dabei ist wiederum ein, aus Gliedern 3 zusammengesetzter Klemmring 4 durch Krafteinleitungsmittel 14 gegen ein Einsteckende 1 gedrückt. Wiederum sind ein Dichtelement 17 und ein Sicherungselement 8 vorgesehen. Das Sicherungselement weist einen Hauptzahn 5 sowie Nebenzähne 6 auf. Bei der vorliegenden Anordnung sind der Hauptzahn und die Nebenzähne zumindest teilweise in die Oberfläche des Einsteckendes 1 gedrückt. Der Hauptzahn ist in bevorzugter Weise gegen die Auszugsrichtung 20 geneigt.

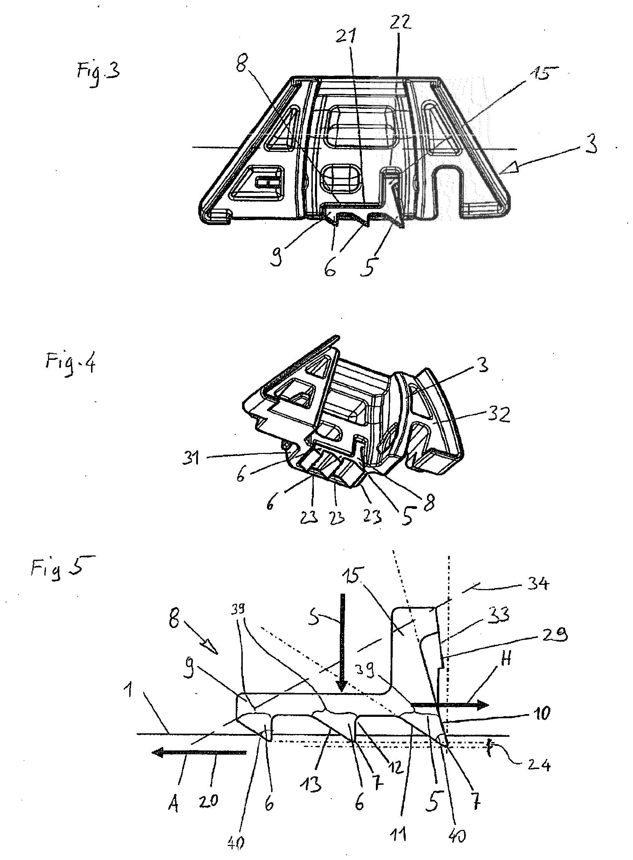

Fig. 3 zeigt eine Ansicht eines erfindungsgemäßen Gliedes 3, das insbesondere zur Bildung eines Klemmrings 4 eingesetzt ist. Das Glied 3 weist an seinem, dem Einsteckende 1 zugewandten Endbereich eine Ausnehmung 21 auf. Diese Ausnehmung 21 ist eingerichtet um zumindest teilweise das Sicherungselement 8 aufzunehmen. Ferner ist eine Verbindungsmittelausnehmung 22 vorgesehen, die mit dem Verbindungsmittel 15 des Sicherungselements 8 zusammenwirkt um das Sicherungselement 8 im Glied 3 zu positionieren und gegebenenfalls zu fixieren. Das Sicherungselement 8 umfasst einen Grundkörper 9, einen Hauptzahn 5 sowie zwei Nebenzähne 6. Die Zähne weisen jeweils Spitzen 7 auf, welche von dem Glied 3 Richtung Einsteckende 1 bzw. Richtung Mittelachse 16 weisen.

Fig. 4 zeigt dieselbe Ausgestaltung wie Fig. 3 jedoch in einer Schrägansicht. Dabei ist wiederum ein Sicherungselement 8 an einem Glied 3 des zu bildenden Klemmrings 4 vorgesehen. Das Sicherungselement 8 weist Zähne, insbesondere einen Hauptzahn 5 und zwei Nebenzähne 6 auf. Die Zähne umfassen jeweils zumindest eine Spitze 7. In der vorliegenden Ausgestaltung sind die Spitzen 7 als geradlinige Kanten 23 ausgeführt. Diese verlaufen im Wesentlichen in einer Normalebene der Mittelachse 16 und somit etwa tangential zur Außenfläche des Einsteckendes.

Fig. 5 zeigt das Detail eines Sicherungselements 8, welches einen Grundkörper 9, ein Verbindungsmittel 15, einen Hauptzahn 5 sowie zwei Nebenzähne 6 aufweist. Der Hauptzahn umfasst eine erste Hauptzahnflanke 10, eine zweite Hauptzahnflanke 11 sowie eine Spitze 7. Die Spitze 7 ragt in der dargestellten Ausführung in die Oberfläche des Einsteckendes 1. Bewirkt wird dies unter anderem durch die Spannkraft S, durch welche das Sicherungselement 8 gegen das Einsteckende 1 gedrückt ist. Ferner ist gegebenenfalls die Auszugskraft A vorgesehen, gegen die die Haltekraft H des Sicherungselements 8 wirkt. Die maximale Haltekraft ist maßgeblich von dem Kraft- bzw. Formschluss zwischen dem Sicherungselement 8 und dem Einsteckende 1 beeinflusst. Zur Verbesserung dieser Verbindung ist der Hauptzahn 5 gegen die Auszugsrichtung 20 der Auszugskraft A geneigt. Insbesondere ist der Winkel zwischen der Auszugsrichtung 20 und der ersten Hauptzahnflanke 10 kleiner als 90°. Dadurch entsteht im Bereich der ersten Hauptzahnflanke 10 eine Hinterschneidung. Auch die zweite Hauptzahnflanke 11 ist gegen die Auszugsrichtung 20 geneigt. Der Winkel zwischen der Auszugsrichtung 20 und der zweiten Hauptzahnflanke 11 ist kleiner als der Winkel zwischen der ersten Hauptzahnflanke 10 und der Auszugsrichtung 20. Die Differenz der beiden Winkel entspricht dem Öffnungswinkel 40 und somit dem Bereich, in dem der Zahn selbst angeordnet ist.

Auch der Nebenzahn 6 weist eine Spitze 7, eine erste Nebenzahnflanke 12 und eine zweite Nebenzahnflanke 13 auf. Die zweite Nebenzahnflanke 13 ist gegen die Auszugsrichtung 20 geneigt, sodass zwischen der zweiten Nebenzahnflanke 13 und der Auszugsrichtung 20 ein Winkel besteht der kleiner als 90° ist. Die erste Nebenzahnflanke 12 hingegen ist in der vorliegenden Ausführung etwa normal zur Auszugsrichtung 20 angeordnet. Im Wesentlichen normal bedeutet in diesem Zusammenhang, dass die erste Nebenzahnflanke normal auf die Auszugsrichtung 20 stehen kann, in geringem Maße gegen die Auszugsrichtung 20 geneigt sein kann, sodass eine geringe Hinterschneidung gegeben ist oder dass die erste Nebenzahnflanke leicht mit der Auszugsrichtung 20 geneigt ist, sodass der Winkel zwischen der Auszugsrichtung 20 und der ersten Nebenzahnflanke größer als 90° ist. In dieser Konfiguration weist die erste Nebenzahnflanke Richtung Mittelachse 16 des Einsteckendes 1.

Anzumerken ist, dass sich die Winkelangaben auf Winkel beziehen, die im Wesentlichen in einer Ebene liegen, insbesondere ist hierbei jene Ebene gewählt, die die Mittelachse 16 des Einsteckendes umfasst und/oder in der Darstellungsebene verläuft.

Der Hauptzahn 5 überragt den bzw. die Nebenzähne 6 um ein gewisses Maß, insbesondere den Überstand 24. In der dargestellten Konfiguration ist somit der Hauptzahn 5 um den Überstand 24 tiefer in die Oberfläche des Einsteckendes 1 gedrückt als die Nebenzähne 6. Ferner weisen die Zähne im Bereich des Grundkörpers eine Basis 39 auf, die in bevorzugter Weise breiter ausgeführt ist, als der Zahn im Bereich der Spitze 7.

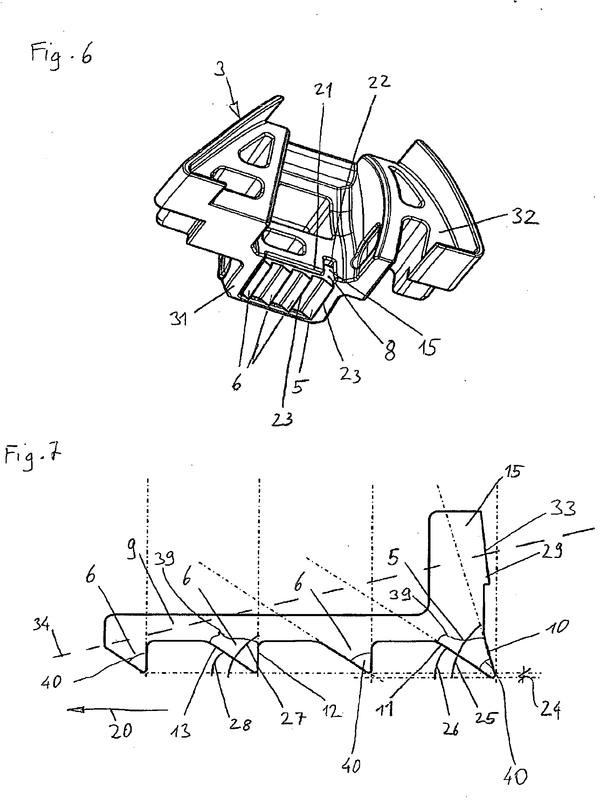

Fig. 6 zeigt eine weitere Ausführungsform eines Gliedes 3 zur Bildung eines Klemmrings 4 für eine erfindungsgemäße Rohrverbindungsvorrichtung. An dem, dem Einsteckende 1 zugewandten Bereich des Gliedes 3 ist in einer Ausnehmung 21 und der Verbindungsmittelausnehmung 22 das Sicherungselement 8 vorgesehen. Dieses weist ein Verbindungsmittel 15 auf, welches in die Verbindungsmittelausnehmung 22 ragt und dort durch Form und/oder Kraftschluss gehalten ist. Das Sicherungselement 8 weist einen Grundkörper 9 sowie einen Hauptzahn 5 und drei Nebenzähne 6 auf. Die Zähne umfassen jeweils Zahnflanken 10, 11, 12, 13 sowie jeweils zumindest eine Spitze 7, welche in der dargestellten Ausführung als Kanten 23 über die gesamte Breite des Sicherungselements 8 verlaufen. Dieses sägezahnähnliche Profil verbessert insbesondere die Auszugssicherheit des Einsteckendes 1 aus der Muffe 2.

Fig. 7 zeigt eine detaillierte Ansicht des Profils des Sicherungselements 8 aus Fig. 6. Dabei sind in Auszugsrichtung 20 gesehen zuerst ein Hauptzahn 5 und anschließend ein Nebenzahn 6 angeordnet. Die weiteren Nebenzähne 6 folgen in Auszugsrichtung 20 dem ersten Nebenzahn nachgeordnet. Wie auch in Fig. 5 sind die Winkel der Neigungen der Haupt- und Nebenzahnflanken bezüglich der Auszugsrichtung 20 definiert. Dabei ist der Winkel 25 der ersten Hauptzahnflanke 10 kleiner als 90°. Der Winkel 26 der zweiten Hauptzahnflanke 11 sowie der Winkel 28 der zweiten Nebenzahnflanke 13 sind ebenfalls kleiner als 90°. Die Winkel 27 der ersten Nebenzahnflanken 12 sind in bevorzugter Weise zwischen 80° und 100°, insbesondere 90°. Der Hauptzahn 5 überragt den Nebenzahn 6 um den Überstand 24. Der Grundkörper 9 ist durchgehend ausgeführt und verläuft in etwa parallel zur Auszugsrichtung 20. Als durchgehend ist insbesondere gemeint, dass zwischen dem Hauptzahn 5 und dem ersten Nebenzahn 6 keine Unterbrechung, keine Bohrung, kein Einschnitt etc. vorliegt. Dies erhöht die Festigkeit des Sicherungselements 8. Ferner ist ein Verbindungsmittel 15 vorgesehen. Dieses ist zumindest teilweise aus einem Fortsatz gebildet der in bevorzugter Weise in die Verbindungsmittelausnehmung 22 des Gliedes 3 einführbar ist. Darüber hinaus weist das Verbindungsmittel 15 ein Klemmelement 29 auf. Dieses Klemmelement wirkt mit der Verbindungsmittelausnehmung 22 zusammen und ist eingerichtet um einen Formschluss und/oder einen Kraftschluss mit dem Glied 3 herzustellen.

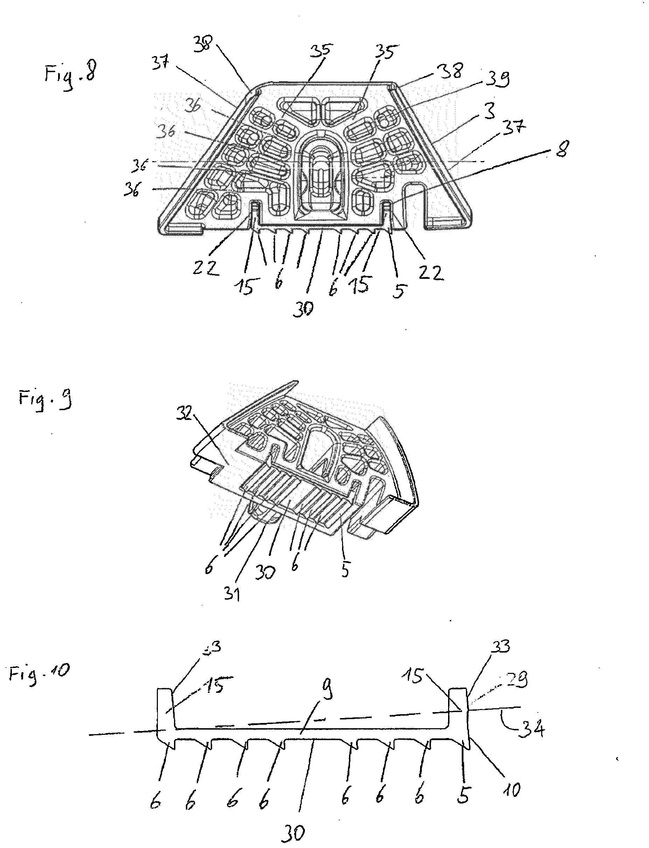

Fig. 8 zeigt eine weitere Ausführungsform eines erfindungsgemäßen Gliedes 3 zur Bildung eines Klemmrings 4 für eine erfindungsgemäße Rohrverbindungsvorrichtung. Das Glied 3 weist zwei Verbindungsmittelausnehmungen 22 auf. In diese ist jeweils ein Verbindungsmittel 15 des Sicherungselements 8 eingeführt. Das Sicherungselement 8 weist wiederum einen Hauptzahn 5 sowie eine Reihe von Nebenzähnen 6 auf. In der vorliegenden Ausführung sind sieben Nebenzähne 6 vorgesehen. In Auszugsrichtung gesehen ist zuerst der Hauptzahn 5 angeordnet. Dieser wird gefolgt von drei Nebenzähnen 6 und einer zweiten Gruppe von vier Nebenzähnen 6. Zwischen den beiden Gruppen von Nebenzähnen ist eine Lücke 30 vorgesehen, in der kein Nebenzahn vorgesehen ist. In diesem ist im Wesentlichen nur der Grundkörper 9 durchgezogen.

Auch Fig. 9 zeigt das selbe Glied 3 wie Fig. 8 mit einem Sicherungselement 8, welches einen Hauptzahn 5 gefolgt von drei Nebenzähnen 6, einer Lücke 30 sowie vier weiteren Nebenzähnen 6 aufweist.

Fig. 10 zeigt eine Detailansicht des Profils des Sicherungselements 8 der Figuren 8 und 9. Dieses Sicherungselement umfasst zwei Verbindungsmittel 15, welche starr mit dem Grundkörper 9 verbunden sind. Vom Grundkörper erheben sich die Zähne, insbesondere der Hauptzahn 5 sowie eine Reihe von Nebenzähnen 6. Zwischen zumindest zwei der Nebenzähne 6 ist eine Lücke 30 vorgesehen. In bevorzugter Weise sind die Nebenzähne, der Hauptzahn, die Verbindungsmittel 15 sowie der Grundkörper 9 aus einem Stück gefertigt - also einstückig.

Als Variationsmöglichkeiten der vorliegenden Erfindung und der angeführten Ausführungsbeispiele bieten sich folgende Merkmale und Merkmalskombinationen an:

Die dargestellten Sicherungselemente sind L-förmig oder U-förmig ausgeführt. Der Hauptzahn 5 ist dabei derart angeordnet, dass seine erste Hauptzahnflanke 10 im Wesentlichen in das Verbindungsmittel 15 übergeht. Es entspricht jedoch ebenfalls dem Erfindungsgedanken, dass sich der Hauptzahn 5 von einer im Wesentlichen parallel zur Auszugsrichtung 20 verlaufenden Fläche erhebt und dass somit die erste Hauptzahnflanke 10 sowie die zweite Hauptzahnflanke 11 in diese Fläche übergehen bzw. an diese Fläche angeschlossen sind. Ferner entspricht es dem Erfindungsgedanken, dass der Hauptzahn 5 in Auszugsrichtung an zweiter, dritter oder vierter Stelle angeordnet ist. Auch eine zentrale Anordnung des Hauptzahnes zwischen den Nebenzähnen sowie die Anordnung des Hauptzahns 5 als letzten Zahn in Auszugsrichtung kann zur Lösung der erfindungsgemäßen Aufgaben dienen.

Das Sicherungselement 8 kann grundsätzlich beliebig an einem, mehreren oder allen Gliedern 3 des Klemmrings 4 angeordnet sein. Die Figuren 4 und 6 zeigen Ausführungsformen in denen das Sicherungselement 8 am Steckabschnitt 31 des Gliedes 3 vorgesehen ist. Das Glied 3 umfasst einen Steckabschnitt 31 und einen Aufnahmeabschnitt 32. Zur Bildung eines im Wesentlichen geschlossenen Klemmrings wird eine Vielzahl an Gliedern aneinander gefügt. Dabei wird der jeweilige Steckabschnitt 31 in den Aufnahmeabschnitt 32 des nachfolgenden Gliedes eingeführt. Gemäß der Ausführungsform in Fig. 9 ist das Sicherungselement 8 am Aufnahmeabschnitt 32 des Gliedes 3 vorgesehen.

Die Kanten 23 des Sicherungselementes 8 sind in den dargestellten Ausführungsformen geradlinig. Es entspricht jedoch durchaus dem Erfindungsgedanken die Kanten 23 gekrümmt, unterbrochen und/oder andersförmig auszuführen. Ferner ist es auch möglich die Kanten schräg verlaufen zu lassen, sodass sie windschief zur Mittelachse 16 angeordnet sind. Durch Zusammensetzen eines Klemmrings mit Sicherungselementen 8 welche schräge Kanten 23 aufweisen ergibt die gesamte Verzahnung um das Rohr eine Schraubenform welche weiter zur Auszugssicherung beiträgt. Die Spitzen 7 der Zähne 5, 6 sind idealisiert als Spitzen ausgeführt. In der Praxis sind diese Spitzen durch fertigungstechnische und wirtschaftliche Voraussetzungen mit einer gewissen Rundung bzw. einer gewissen Toleranz versehen. Die Spitzen weisen in bevorzugter Weise einen Radius auf, der unter einem Millimeter, bevorzugt maximal 0,27mm beträgt.

In einem weiteren, nicht dargestellten Ausführungsbeispiel sind die Kanten 23 der Spitzen 7 unterbrochen und erstrecken sich nur über einen Teilbereich der Breite des Sicherungselements 8. Auch die Zähne selbst sind nicht zwingender Weise entlang der gesamten Breite des Sicherungselements 8 vorgesehen. Sie können ebenfalls mittig, seitlich oder asymmetrisch angeordnet sein. Auch die Unterbrechungen können symmetrisch oder einem gewissen Muster folgend angeordnet sein.

In weiterer Folge wird das Verfahren zur Herstellung des Sicherungselements 8 näher beschrieben. Die exakte Ausgestaltung der Form sowie gleichbleibende Qualität zur Erhaltung der Festigkeit sind für die Funktionalität der vorliegenden Rohrverbindungsvorrichtung wichtige Faktoren. Aus wirtschaftlicher Sicht ist es darüber hinaus wichtig, die hohen Anforderungen, die an das Sicherungselement gestellt werden zu vertretbaren Kosten zu produzieren. Der Zielkonflikt zwischen den hohen Anforderungen an die Festigkeit des Sicherungselements, der Maßgenauigkeit des Sicherungselements und den wirtschaftlichen Überlegungen zu den Produktionskosten der Rohrverbindungsvorrichtung wird insbesondere durch das erfindungsgemäße Verfahren gelöst.

Zur Herstellung des Sicherungselements wird zuerst ein Modell des herzustellenden Sicherungselements erstellt. Dieses wird nicht in Originalgröße sondern mit einem gewissen Übermaß eingeformt. Die entstehende Form beinhaltet einen Hohlraum der im Wesentlichen dem Sicherungselement mit einem gewissen Übermaß entspricht. Zur Herstellung des Sicherungselements werden zuerst unterschiedliche Bestandteile von Metallpulvern und Zusätzen entsprechend der gewünschten Legierung miteinander zu einer Mischung vermengt. Anschließend werden thermoplastische Kunststoffe und Additive beigemischt. Diese Additive sind beispielsweise Bindemittel. Die Mischung des Kunststoffs und des Metallpulvers wird in weiterer Folge einer modifizierten thermoplastischen Spritzgießmaschine zugeführt, welche die Mischung in die Form einbringt. Die Zuführung des Gemisches aus Metallpulver, thermoplastischen Kunststoffen und gegebenenfalls Additiven kann dabei direkt erfolgen oder mit gewissen Zwischenschritten. Diese Zwischenschritte umfassen beispielsweise thermisches Verbinden der Kunststoffe mit dem Metallpulver und anschließende Herstellung eines Granulats, welches in weiterer Folge der Spritzgießmaschine zugeführt wird.

Es kann aber alternativ dazu auch die inhomogene Mischung des Metallpulvers mit Kunststoffgranulaten und Additiven der Spritzgießmaschine direkt zugeführt werden. Die Spritzgießmaschine umfasst eine Wärmezuführungseinrichtung sowie eine Fördervorrichtung, insbesondere eine Förderschnecke zur Verdichtung der Mischung und/oder der daraus entstehenden aufgeschmolzenen, zähen Masse. Die fließfähige Masse wird in weiterer Folge unter hohem Druck in die Kavitäten der Form gepresst. Dabei wird die Masse in die Ausnehmungen zur Bildung der Zähne, insbesondere des Hauptzahns und der Nebenzähne, des Grundkörpers und der Verbindungsmittel eingespritzt. Anschließend wird die Masse in den genannten Kavitäten durch Abkühlung in ihrer Form erstarren gelassen. Nach dem Abkühlen auf eine Entformungstemperatur wird die Form entlang einer Formteilungslinie 34 geöffnet, der erstarrte Teil entnommen und weiter verarbeitet. Dieses entnommene Zwischenprodukt entspricht vom Aussehen dem herzustellenden Sicherungselement, jedoch mit einem gewissen Übermaß. Anschließend wird in einem weiteren Verfahrensschritt der als Binder verwendete Kunststoff aus dem Zwischenprodukt herausgelöst. Dabei kommen thermische, chemische und/oder physikalische Prozessschritte zum Einsatz. Nach der Entfernung des Kunststoffbestandteiles ist ein zweites Zwischenprodukt gebildet, welches dem Aussehen des herzustellenden Sicherungselements entspricht, jedoch im Wesentlichen nur noch aus den metallischen bzw. aus den Legierungsbestandteilen besteht. Diese offenporige Struktur wird in einem weiteren Schritt knapp unterhalb des Schmelzpunktes der Legierung gesintert bzw. behandelt, wodurch ein fester metallischer Körper entsteht, der auch in seiner Größe dem gewünschten Endprodukt entspricht.

Das erfindungsgemäße Verfahren zur Herstellung löst insbesondere die Aufgabe, dass die maßgeblichen Teile der Rohrverbindungsvorrichtung effizient hergestellt werden können ohne dabei die hohen Ansprüche an die Festigkeit und die Maßtoleranz zu vernachlässigen. In den Fig. 5 und 7 sind Passschrägen 33 dargestellt. Diese sind als Teilflächen der Klemmelemente 29 ausgebildet. Durch die schräge Ausgestaltung wird ein Einführen des Sicherungselements 8 in die Glieder 3 erleichtert. Ferner ist durch die spezielle hakenförmige Ausgestaltung die Positionierung und Fixierung des Verbindungsmittels 15 in der Verbindungsmittelausnehmung 22 erleichtert und verbessert. Um die Herstellung effizient zu gestalten ist beim Formenbau darauf zu achten, dass die Form insbesondere die Spritzgussform aus so wenig Teilen wie möglich besteht. Durch die erfindungsgemäße Ausgestaltung des Sicherungselements einerseits sowie der Form andererseits kann eine 2-teilige Form verwendet werden deren Teilungslinien entlang der Formteilungslinie 34 verläuft. Durch die spezielle Ausgestaltung der Flanken 10, 11, 12, 13 der Zähne 5, 6 und der Passschrägen 33 sowie der L-förmigen Ausgestaltung der Kombination aus Grundkörper 9 und Verbindungsmittel 15 ist die Wahl der Formteilungslinien und der Ausformrichtungen für die Ausformbarkeit wichtig. Insbesondere beim Einformen und/oder Spritzgießen hinterschnittener Elemente wie sie sowohl bei dem Hauptzahn oder auch bei dem Klemmelement 29 vorgesehen sind muss dennoch eine leichte Ausformbarkeit gegeben sein. Ein Merkmal des erfindungsgemäßen Verfahrens ist somit, dass die Formteilungslinie 34 derart verläuft, dass trotz der hinterschnittenen Zähne die Ausformbarkeit aus einer 2-teiligen Form ermöglicht ist. In Fig. 5 verläuft die Formteilungslinie 34 beispielsweise von einer äußeren Kante oder äußeren Fläche des Verbindungsmittels 15 zu der gegenüberliegenden äußeren Kante oder äußeren Fläche des Grundkörpers 9. In Fig. 7 verläuft die Formteilungslinie 34 von einer äußeren Kante oder äußeren Fläche des Grundkörpers Richtung Passschräge 33 und Klemmelement 29. Durch den schrägen Verlauf der Formteilungslinie ist die Form bezüglich der Formteilungslinie 34 frei von Hinterschneidungen.

Fig. 10 zeigt eine weitere Ausgestaltung eines Details der erfindungsgemäßen Rohrverbindungsvorrichtung. In dieser Ausgestaltungsform ist neben dem ersten Verbindungsmittel 15, welches das Klemmelement 29 trägt auch ein zweites Verbindungsmittel 15 auf der gegenüberliegenden Seite des Sicherungselements vorgesehen. Dieses weist an seiner nach innen weisenden Fläche des Verbindungsmittels eine Passschräge 33 auf. Diese Passschräge ist eingerichtet oder dient dazu die Passung zwischen dem Verbindungsmittel und der Verbindungsmittelausnehmung 22 zu verbessern und das Einführen sowie das Klemmen zu erleichtern. Auch das Klemmelement 29 des ersten Verbindungsmittels 15 weist eine Passschräge 33 auf. Zusätzlich zu den Hinterschneidungen und der sägezahnförmigen Ausgestaltungen der Zähne 5, 6 und des Klemmelements 29 ist die Kombination aus Grundkörper und Verbindungsmitteln 15 U-förmig ausgestaltet. Dies ist bei der Ausformung zu berücksichtigen. In einer bevorzugten Ausführungsform verläuft die Teilung der zweiteiligen Hohlform entlang der Formteilungslinie 34. Diese ist derart gelegt, dass alle Elemente des Sicherungselements 8 einfach ausgeformt und aus der Form entnommen werden können. Insbesondere die Passschrägen 33 sind ausgestaltet, um die Entnahme des spritzgegossenen Zwischenprodukts aus der Form zu ermöglichen und/oder erleichtern. Die beiden Passschrägen 33 in Fig. 10 sind im Wesentlichen parallel. Sie sind in etwa oder im Wesentlichen normal zur Formteilungslinie 34. Bevorzugter Weise weisen die Passschrägen 33 eine gewisse Neigung zur normalen auf die Formteilungslinie 34 auf, sodass eine Ausformung ermöglicht ist. In einer möglichen Ausführungsform ist die erste Hauptzahnflanke 10 im Wesentlichen parallel zur Passschräge 33.

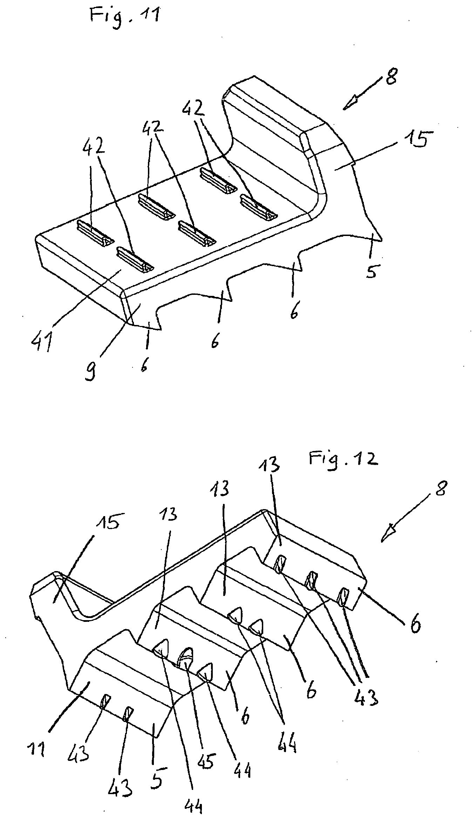

Fig. 11 zeigt eine Schrägansicht eines erfindungsgemäßen Sicherungselements 8, wobei insbesondere jene Fläche des Sicherungselements 8 zu sehen ist, die dem Glied 3 des Klemmrings zugewandt ist. Jedoch ist das Glied 3 in der vorliegenden Figur 11 nicht dargestellt. Das Sicherungselement 8 umfasst einen Grundkörper 9, welcher an einer, bevorzugt der dem Einsteckende 1 zugewandten, Seite eine Vielzahl von Zähnen beinhaltend einen Hauptzahn 5 sowie mehrere Nebenzähne 6 aufweist. Auf der gegenüberliegenden Seite des Grundkörpers 9 ist die Anlagefläche 41 vorgesehen, welche in eingesetzter Stellung dem Glied 3 zugewandt ist. An oder auf der Anlagefläche 41 sind mehrere Fortsätze 42 vorgesehen. Die Fortsätze 42 sind in bevorzugter Weise länglich, prismenförmig und/oder stegförmig ausgebildet, wobei ihre längliche Form im Wesentlichen der Längserstreckung der Zähne 5, 6 folgt oder zu dieser parallel ist. Die Fortsätze 42 erheben sich von der Anlagefläche 41 Richtung Glied 3. Insbesondere weisen die Fortsätze 42 jeweils eine Spitze oder Kante auf. In eingesetzter Stellung wirkt der Druck, welcher auf die Glieder 3 des Klemmrings 4 wirkt, auf das Einsteckende. Dabei wird das Sicherungselement 8 von dem Glied 3 an das Einsteckende gepresst. Um die Verbindung zwischen dem Glied 3 und dem Sicherungselement 8 zu verbessern, sind die Fortsätze 42 vorgesehen. In bevorzugter Weise werden die Fortsätze 42 in Teile des Glieds 3 eingedrückt um somit den Reibschluss zu verbessern und/oder einen Formschluss zu bilden. Dabei verläuft die Kraftrichtung im Wesentlichen normal zur Längserstreckungsrichtung der Zähne sowie der Fortsätze 42. Dabei tritt der Effekt auf, dass sich die Fortsätze 42 in Teilen der Glieder 3 verkrallen. Somit wird ein Teil der zu übertragenden Kraft über die Fortsätze 42 in das Glied 3 eingeleitet. Ein weiterer Teil der Kraft wird über das Verbindungsmittel 15 in da Glied eingeleitet. Bevorzugt sind die Fortsätze 42 aus einem festeren oder härteren Material gebildet als die Glieder 3, um ein Eindringen der Fortsätze 42 in die Glieder zu ermöglichen.

In der vorliegenden Ausführung sind sechs Fortsätze 42 vorgesehen, die jeweils paarweise entlang der Anlagefläche 41 angeordnet sind. Jedoch können auch andere Anordnungen dem Erfindungsgedanken entsprechen.

Fig. 12 zeigt eine weitere Ausführungsform eines erfindungsgemäßen Sicherungselementes 8 mit einem Hauptzahn 5 sowie mehreren Nebenzähnen 6. Von den Flanken der Zähne 5, 6 erheben sich Zacken 43, Kegelspitzen 45 und/oder Schneiden 44. Im Bereich des Hauptzahnes 5 erheben sich zwei Zacken 43 aus der zweiten Hauptzahnflanke 11. An dem daneben liegenden Nebenzahn 6 erheben sich zwei Schneiden 44 und eine Kegelspitze 45 aus der zweiten Nebenzahnflanke 13. An dem daneben angeordneten zweiten Nebenzahn erheben sich zwei Schneiden 44 aus der zweiten Nebenzahnflanke 13 des entsprechenden Zahnes. Aus der darauffolgenden zweiten Nebenzahnflanke 13 des Zahnes 6 erheben sich drei Zacken 43. Die Zacken 43 sind im Wesentlichen kegelförmig, pyramidenförmig oder einer ähnlichen Form entsprechend ausgebildet. Sie überragen einen Hauptzahn 5 oder einen Nebenzahn 6. Die Schneiden 44 erheben sich ebenfalls von einer Zahnflanke eines Zahnes. Sie weisen doch keine spitz zulaufende Form auf, sondern umfassen einen schneidenförmigen Körper, der beispielsweise kreissegmentförmig von einer Flanke absteht. In vorteilhafter Weise wirken die Zacken 43, die Kegelspitzen 45 und die Schneiden 44 positiv auf die Auszugssicherung. So werden die Zacken 43, die Kegelspitzen 45 sowie die Schneiden 44 schon bei geringem Druck in die Oberfläche des Einsteckendes eingedrückt. Schon bei geringer Montagekraft ist ein verbesserter Reibschluss oder Formschluss hergestellt. Die Zacken und Schneiden sind bevorzugt kleiner ausgeführt, als die Zähne. Insbesondere weisen sie eine geringere Höhe auf, als die Zähne, von deren Flanken sie sich erheben.

Die in Fig. 12 gezeigte Anordnung der Schneiden, Kegelspitzen und Zacken entspricht einer möglichen Anordnung. Jedoch entspricht es ebenfalls dem Erfindungsgedanken an einem Zahn Zacken, Kegelspitzen und Schneiden vorzusehen, an einem Zahn eine oder vier Zacken oder Schneiden vorzusehen, an einem Zahn mehr als vier Zacken oder Schneiden vorzusehen und/oder an einem Zahn sowohl Zacken als auch Schneiden vorzusehen.

Ferner entspricht es dem Erfindungsgedanken, dass Sicherungselemente sowohl Fortsätze 42 als auch Zacken 43 und/oder Schneiden 44 aufweisen. Ebenfalls entspricht es dem Erfindungsgedanken, dass Sicherungselemente entweder Fortsätze 42 oder Zacken 43 und/oder Schneiden 44 aufweisen.

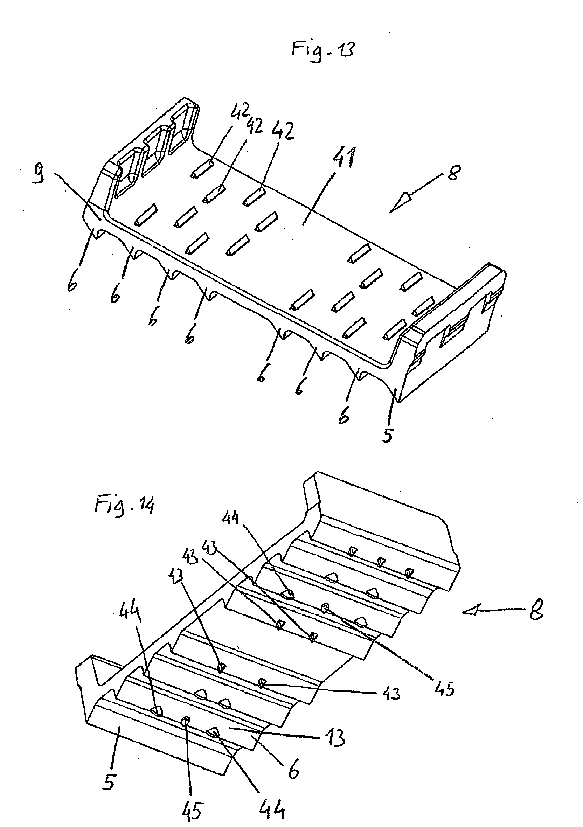

Fig. 13 zeigt eine Schrägansicht ein Detail einer weiteren Ausführungsform der vorliegenden Erfindung. Wiederum ist ein Sicherungselement 8 gezeigt, welches eine Vielzahl an Zähnen, insbesondere einen Hauptzahn 5 und sieben Nebenzähne 6 aufweist. Die Nebenzähne 6 sind an einem Grundkörper 9 vorgesehen. Auf der gegenüberliegenden Seite des Grundkörpers 9 ist die Anlagefläche 41 vorgesehen, welche in zusammengesetzter Stellung an dem Glied 3 anliegt oder zumindest diesem zugewandt ist. An der Anlagefläche 41 sind Fortsätze 42 vorgesehen. Diese Fortsätze 42 erheben sich analog zu Figur 11 von der Anlagefläche 41 Richtung Glied 3. Sie erfüllen im Wesentlichen denselben Zweck wie die Fortsätze 42 der Figur 11. Lediglich die Anordnung der einzelnen Fortsätze 42 auf der Anlagefläche 41 ist unterschiedlich zur Anordnung der Figur 11.

Figur 14 zeigt eine Schrägansicht einer weiteren Ausführungsform eines erfindungsgemäßen Sicherungselements 8. Analog zu Figur 12 sind an den Zahnflanken der Zähne Zacken 43, Kegelspitzen 45 und/oder Schneiden 44 vorgesehen. So ist beispielsweise an dem ersten Nebenzahn 6 eine Vielzahl an derartigen Elementen vorgesehen. Es erheben sich zwei Schneiden 44 aus der zweiten Nebenzahnflanke 13. Ferner ist auch eine Kegelspitze 45 zwischen den beiden Schneiden 44 vorgesehen. Auch diese Kegelspitze 45 erhebt sich aus dem Zahn Richtung Einsteckende 1. Der Hauptzahn 5 weist in der vorliegenden Ausführungsform keine Zacken 43 oder Schneiden 44 auf und ist somit frei von Zacken 43 oder Schneiden 44. Weitere Nebenzähne 6 umfassen ebenfalls Zacken 43 und/oder Schneiden 44. Die Zacken 43 und die Schneiden 44 haben im Wesentlichen dieselbe Wirkung wie die Zacken und Schneiden der Figur 12.

Gemäß einer weiteren, nicht dargestellten Ausführungsform sind die Zacken 43, die Kegelspitzen 45 und/oder die Schneiden 44 in geringem Abstand zueinander angeordnet. Insbesondere sind sie derart angeordnet, dass der Abstand zwischen den Zacken 43, Kegelspitzen 45 oder den Schneiden 44 geringer ist als die Breite der jeweiligen Zacke bzw. der jeweiligen Schneide. Ferner kann zwischen den Elementen 43, 44, 45 der Zahn gekrümmt, gebogen oder gezackt ausgeführt sein.

Die Zacken 43 und Schneiden 44 der Figuren 11, 12, 13 und 14 erheben sich von den Zähnen der Sicherungselemente. Die Hauptrichtung der Zacken 43 und Schneiden 44 verläuft somit im Wesentlichen Richtung Einsteckende 1, bevorzugt in etwa radial Richtung Mittelachse 16 des Einsteckendes. Die Herstellung der komplexen Zahnformen, die gegebenenfalls Zacken 43 und/oder Schneiden 44 aufweisen, ist erst durch das erfindungsgemäße Verfahren ermöglicht.

Bevorzugt weisen die Fortsätze 42, die Zacken 43 und oder die Schneiden 44 einen gewissen Abstand zu den seitlichen Rändern der Sicherungselemente 8 auf. In Längserstreckungsrichtung der Zähne 47 weist das Sicherungselement 8 somit keinen konstanten Querschnitt auf.

Weitere vorteilhafte Merkmale der Erfindung ergeben sich durch die spezielle Ausgestaltung der Glieder 3. Fig. 8 zeigt eine mögliche Ausgestaltung einer Verrippung des Gliedes 3. Dabei sind Hauptrippen 35 und Nebenrippen 36 vorgesehen die sich von den Außenflächen 37 des Gliedes 3 nach innen erstrecken. Wie in Fig. 1 gezeigt ist, ist eine Berührung zwischen den Kegelflächen 18 und dem Klemmring 4 bzw. den Gliedern 3 insbesondere in den Krafteinleitungsbereichen 38 gegeben. Diese stellen jene Bereiche dar, in denen die Spannkraft maßgeblich auf die Glieder übertragen wird. Dadurch sind insbesondere diese Bereiche hochbelastet und erfindungsgemäß speziell ausgestaltet. So erstrecken sich von den Krafteinleitungsbereichen 38 Hauptrippen 35 Richtung Innenbereich des Gliedes 3. Diese sind in bevorzugter Weise dicker und/oder fester ausgeführt als die Nebenrippen 36. In einer bevorzugten Ausführungsform verlaufen die Hauptrippen 35 zwischen 70 und 110° geneigt zur Außenfläche 37 des Gliedes. Gemäß einer weiteren bevorzugten Ausführungsform verlaufen die Hauptrippen 35 im Wesentlichen der durch die Kegelflächen 18 eingeleiteten Spannkräfte S.

Weitere vorteilhafte Merkmale der Erfindung betreffen die spezielle Ausgestaltung der Haupt- und Nebenzähne 5, 6. Diese können einerseits hinterschnitten sein, um einen besseren Halt und somit eine bessere Auszugssicherung des Einsteckendes 1 zu erreichen. Ferner weisen die Zähne 5, 6 einen Mindestabstand auf, um eine Abscherung des Rohrmaterials, welches sich zwischen den Zähnen 5, 6 befindet zu vermeiden. Darüber hinaus weisen die Zähne 5, 6 eine gewisse Dicke oder einen gewissen Mindestöffnungswinkel auf, um gegen plastische oder elastische Verformung eine nötige Widerstandskraft zu bieten. Dies wird insbesondere durch die erfindungsgemäße Ausgestaltung der Zähne 5, 6 erreicht. So weisen die Zähne 5, 6 zumindest teilweise eine Hinterschneidung auf die derart ausgebildet ist, dass eine Verbiegung der Zähne vom Einsteckende Richtung Grundkörper vermieden ist. Gemäß einer Ausführung beträgt der Winkel 25 der ersten Hauptzahnflanke 10 etwa 75°. Der Winkel 26 der zweiten Hauptzahnflanke 11 beträgt etwa 35°. Der Öffnungswinkel 40 des Zahnes beträgt in dieser bevorzugten Ausführung etwa 40°. Durch diese oder ähnliche Winkelverhältnisse ist eine ausreichende Stützung und eine ausreichend breite Basis 39 des Zahns am Grundkörper 9 gegeben. Die Nebenzähne weisen in einer möglichen Ausführung ähnliche Winkelverhältnisse auf. So kann der Winkel 27 der ersten Nebenzahnflanke 12 etwa 90° betragen. Auch leichte Hinterschneidungen wie beispielsweise bei einem Winkel von 75-85° oder leichte Neigungen von 95-105° sind denkbar. Der Winkel 28 der zweiten Nebenzahnflanke 13 kann beispielsweise etwa 35° betragen. Die zweite Hauptzahnflanke und die zweite Nebenzahnflanke können gemäß einer bevorzugten Ausführungsform parallel verlaufen. Der Öffnungswinkel 40 der Nebenzähne kann dabei etwa 55° betragen.

Der Winkel der Passschrägen 33 zur Auszugsrichtung 20 beträgt etwa 80 bis 85, bevorzugt 83°. Dieser Winkel entspricht somit einer Neigung von etwa 7° von der normalen auf die Auszugsrichtung. Wie bei dem ersten Hauptzahn ist auch bei der Passschräge 33 des Klemmelements 29 eine leichte Hinterschneidung gegeben.

Die in Fig. 7 dargestellte Ausführung eines Sicherungselements für eine erfindungsgemäße Rohrverbindungsvorrichtung kann beispielsweise für Rohrdimensionen des Einsteckendes von etwa 85 mm bis 230mm eingesetzt werden. Dazu beträgt die Gesamtlänge, also die Länge des dargestellten Elements von links nach rechts etwa 14mm, die Gesamthöhe welche normal darauf in der Darstellungsebene gemessen ist etwa 7mm und die Tiefe, die normal zur Darstellungsebene gemessen ist etwa 10mm. Das Sicherungselement, welches in Fig.5 dargestellt ist, kann beispielsweise für Rohrdimensionen des Einsteckendes von einem Durchmesser 40mm bis 130mm eingesetzt werden. Die Gesamtlänge des Elements kann dabei beispielsweise etwa 9mm betragen, die Höhe etwa 6,5mm und die Breite des Elements, die normal zur Darstellungsebene gemessen ist etwa 5mm. Bei der Ausführung nach Fig. 10 können beispielsweise Rohrdurchmesser des Einsteckendes von 160mm bis 700mm eingesetzt werden. Die Länge des Sicherungselements kann dabei von links nach rechts in der vorliegenden Darstellung etwa 34 mm betragen, die Höhe die sich insbesondere aus der ersten Hauptzahnflanke und dem Verbindungsmittel zusammensetzt beträgt etwa 7mm und die Breite des Elements, die normal zur Darstellungsebene gemessen wird beträgt etwa 12mm. Die Zahl der Zähne der unterschiedlichen Ausführungsformen kann je nach Zahngeometrie und Anordnung variieren.

An dieser Stelle sei angemerkt, dass sich die Erfindung nicht auf die angeführten Ausführungsbeispiele beschränkt.

Die Figuren sind zumindest teilweise schematische Darstellungen, wobei die Dimensionen und Proportionen von weiteren, zeichnerisch nicht dargestellten, Ausführungsformen oder Merkmalen sowie von realen Ausführungen abweichen können.
- 1.: Einsteckende
- 2.: Muffe
- 3.: Glieder
- 4.: Klemmring
- 5.: Hauptzahn
- 6.: Nebenzahn
- 7.: Spitze
- 8.: Sicherungselement
- 9.: Grundkörper
- 10.: Erste Hauptzahnflanke
- 11.: Zweite Hauptzahnflanke
- 12.: Erste Nebenzahnflanke
- 13.: Zweite Nebenzahnflanke
- 14.: Krafteinleitungsmittel
- 15.: Verbindungsmittel
- 16.: Mittelachse des Einsteckendes
- 17.: Dichtelement
- 18.: Kegelflächen (a muffenseitig, b öffnungsseitig)
- 19.: Spannelement
- 20.: Auszugsrichtung
- 21.: Ausnehmung
- 22.: Verbindungsmittelausnehmung
- 23.: Kante
- 24.: Überstand
- 25.: Winkel der Erste Hauptzahnflanke
- 26.: Winkel der Zweite Hauptzahnflanke
- 27.: Winkel der Erste Nebenzahnflanke
- 28.: Winkel der Zweite Nebenzahnflanke
- 29.: Klemmelement
- 30.: Lücke
- 31.: Steckabschnitt
- 32.: Aufnahmeabschnitt
- 33.: Passschräge
- 34.: Formteilungslinie
- 35.: Hauptrippe
- 36.: Nebenrippe
- 37.: Außenfläche des Gliedes
- 38.: Krafteinleitungsbereich
- 39.: Basis
- 40.: Öffnungswinkel
- 41.: Anlagefläche
- 42.: Fortsartz
- 43.: Zacke
- 44.: Schneide
- 45.: Kegelspitze

- H: Haltekraft
- S: Spannkraft
- A: Auszugskraft

## Patentansprüche

1. **Rohrverbindungsvorrichtung** für eine auszugssichere und dichtende Verbindung eines Einsteckendes (1) mit einer Muffe (2), wobei die Rohrverbindungsvorrichtung einen im Wesentlichen geschlossenen Klemmring (4) umfasst, der einen variablen Umfang aufweist und aus mehreren relativ zueinander beweglich angeordneten Gliedern (3) zusammengesetzt ist, die über Krafteinleitungsmittel (14) Richtung Einsteckende (1) bewegbar oder mit einer Spannkraft (S) gegen das Einsteckende (1) pressbar sind, wobei an zumindest einem Glied ein Sicherungselement (8) vorgesehen ist, welches Richtung Einsteckende gerichtete Zähne (5, 6) aufweist, die jeweils eine Basis (39), eine erste Zahnflanke (10), eine zweite Zahnflanke (11) und eine Spitze (7) aufweisen, **dadurch gekennzeichnet,**
- **dass** zumindest ein Zahn (5, 6) im Bereich der Basis (39) breiter ausgeführt ist als im Bereich der Spitze (7) und eine Hinterschneidung (10) aufweist,
- und **dass** das Sicherungselement (8) zumindest einen Hauptzahn (5) und zumindest einen Nebenzahn (6) aufweist, wo bei der Hauptzahn (5) den Nebenzahn Richtung Einsteckende (1) überragt.

2. Rohrverbindungsvorrichtung nach Anspruch 1, **dadurch gekennzeichnet, dass** das Sicherungselement (8) einen Grundkörper (9) umfasst, von welchem sich die Zähne (5, 6), insbesondere ein Hauptzahn (5) und ein Nebenzahn (6), Richtung Einsteckende (1) erheben und dass der Hauptzahn (5) und der Nebenzahn (6) durch den Grundkörper (9) verbunden sind.

3. Rohrverbindungsvorrichtung nach Anspruch 2, **dadurch gekennzeichnet, dass** der Grundkörper (9) zwischen dem Hauptzahn (5) und dem Nebenzahn (6) eine durchgehende und/oder unterbrechungsfreie Form aufweist, die im Wesentlichen frei von Durchgangsöffnungen und/oder Einschnitten ist.

4. Rohrverbindungsvorrichtung nach einem der Ansprüche 1 bis 3, **dadurch gekennzeichnet, dass** die Zähne (5, 6) jeweils eine Spitze (7) aufweisen, die eingerichtet ist, um ein Eindringen in das Einsteckende unter der Spannkraft (S) zu ermöglichen.

5. Rohrverbindungsvorrichtung nach einem der Ansprüche 1 bis 4, **dadurch gekennzeichnet, dass** der Hauptzahn (5) gegen die Auszugskraft (A) geneigt ist und die Hinterschneidung aufweist, wobei der Hauptzahn (5) eine erste Hauptzahnflanke (10) aufweist, deren Winkel (25) bevorzugt kleiner ist als 90° oder, dass bei zumindest einem Zahn die Spitze (7) die Basis (39) gegen die Auszugsrichtung (20) überragt.

6. Rohrverbindungsvorrichtung nach einem der Ansprüche 1 bis 5, **dadurch gekennzeichnet, dass** die Zähne (5, 6) einen im Wesentlichen dreiecksförmigen Querschnitt aufweisen, der von der Basis, der ersten Zahnflanke, der zweiten Zahnflanke und der Spitze begrenzt ist, wobei der Hauptzahn (5) und die Nebenzähne (6) im Bereich der Basis (39) breiter ausgeführt sind als im Bereich der Spitze (7).

7. Rohrverbindungsvorrichtung nach einem der Ansprüche 1 bis 6, **dadurch gekennzeichnet, dass** an jedem Glied der Rohrverbindungsvorrichtung ein Sicherungselement vorgesehen ist.

8. Rohrverbindungsvorrichtung nach einem der Ansprüche 1 bis 7, **dadurch gekennzeichnet, dass** das Sicherungselement einstückig bevorzugt aus Metall ausgeführt ist und insbesondere aus korrosionsbeständigem, härtbarem und/oder gehärtetem Stahl gebildet ist.

9. Rohrverbindungsvorrichtung nach einem der Ansprüche 1 bis 8, **dadurch gekennzeichnet, dass** an den Zähnen, insbesondere im Bereich der Spitzen der Zähne Zacken (43), Kegelspitzen (45) und/oder Schneiden (44) vorgesehen sind, wobei sich die Schneiden (44), die Kegelspitzen (45) und/oder die Zacken (43) von einer Zahnflanke Richtung Einsteckende (1) erheben und die Spitze (7) des jeweiligen Zahnes Richtung Einsteckende (1) überragen.

10. Rohrverbindungsvorrichtung nach Anspruch 9, **dadurch gekennzeichnet, dass** die Zacken (43) und die Kegelspitzen (45) im Wesentlichen spitz, beispielsweise kegelförmig oder pyramidenförmig ausgeführt sind.

11. Rohrverbindungsvorrichtung nach einem der Ansprüche 1 bis 10, **dadurch gekennzeichnet, dass** an der Anlagefläche (41) des Sicherungselements (8) Richtung Glied (3) gerichtete Fortsätze (42) vorgesehen sind.

12. Rohrverbindungsvorrichtung nach Anspruch 11, **dadurch gekennzeichnet, dass** die Fortsätze (42) zur Verbesserung des Reib- oder Formschlusses zwischen dem Glied (3) des Klemmrings (4) und dem Sicherungselement (8) zumindest teilweise in einen Teil des Gliedes (3) eingedrückt oder verkrallt sind.

13. **Verfahren zur Herstellung** einer Rohrverbindungsvorrichtung nach einem der vorangegangenen Ansprüche,
**dadurch gekennzeichnet, dass**
das Sicherungselement durch folgende Verfahrensschritte hergestellt wird:
- eine Masse, die zumindest metallische Bestandteile, Bindemittel und KunststoffBestandteile umfasst, in eine Form eingebracht, bevorzugt spritzgegossen wird,
- wobei die Form einen Hohlraum aufweist, der der Negativform des herzustellenden Sicherungselements mit einem Übermaß entspricht,
- danach die geformte Masse aus der Form entnommen wird,
- das Bindemittel chemisch, physikalisch und/oder thermisch entfernt wird und
- anschließend unter Wärmeeinwirkung die geformte Masse zu einem metallischen Körper entbindert, geschmolzen und/oder gesintert wird.

14. Verfahren nach Anspruch 13, **dadurch gekennzeichnet, dass** die Masse nahe dem Schmelzpunkt der die Metallbestandteile umfassenden Metallverbindung zu einem metallischen Körper verarbeitet wird.

15. Verfahren nach Anspruch 13 oder 14, **dadurch gekennzeichnet, dass** zur Herstellung eines Sicherungselements die Form entlang einer Formteilungslinie (34) geteilt und offenbar ist.

16. Verfahren nach einem der Ansprüche 13 bis 15, **dadurch gekennzeichnet, dass** zur Herstellung eines Sicherungselements der Hohlraum der Form bezüglich der Formteilungslinie(34) frei von Hinterschneidungen ist.

## Claims

1. A **pipe connection device** for a separation-proof and sealed connection of an insertion end (1) to a sleeve (2), wherein the pipe connecting device comprises a substantially closed clamping ring (4) which has a variable circumference and is composed of a plurality of members (3) which are arranged to be movable relative to one another and which can be moved towards the insertion end (1) via force exertion means (14) or can be pressed against the insertion end (1) by means of a clamping force (S), wherein a securing element (8) is provided on at least one member, said securing element having teeth (5, 6) pointing towards the insertion end and each having a base (39), a first tooth flank (10), a second tooth flank (11) and a tip (7),
**characterized in that**
- at least one tooth (5, 6) is designed to be wider in the area of the base (39) than in the area of the tip (7) and has an undercut (10),
- and **in that** the securing element (8) has at least one main tooth (5) and at least one auxiliary tooth (6), wherein the main tooth (5) protrudes above the auxiliary tooth in the direction towards the insertion end (1).

2. The pipe connecting device according to claim 1, **characterized in that** the securing element (8) comprises a base body (9) from which the teeth (5, 6), in particular a main tooth (5) and an auxiliary tooth (6), project towards the insertion end (1), and **in that** the main tooth (5) and the auxiliary tooth (6) are connected by the base body (9).

3. The pipe connecting device according to claim 2, **characterized in that** between the main tooth (5) and the auxiliary tooth (6), the base body (9) has a continuous and/or uninterrupted shape that is substantially free from through-openings and/or recesses.

4. The pipe connecting device according to any one of claims 1 to 3, **characterized in that** the teeth (5, 6) each have a tip (7) that is configured so as to enable the penetration into the insertion end under said tensioning force (S).

5. The pipe connecting device according to any one of claims 1 to 4, **characterized in that** the main tooth (5) is inclined against to the extraction force (A) and has the undercut, wherein the main tooth (5) has a main first tooth flank (10), the angle (25) of which is preferably smaller than 90°, or **in that** for at least one tooth, the tip (7) projects over the base (39) in the direction against the extraction direction (20).

6. The pipe connecting device according to any one of claims 1 to 5, **characterized in that** the teeth (5, 6) have a substantially triangular cross-section that is defined by the first tooth flank, the second tooth flank and the tip, wherein the main tooth (5) and the auxiliary teeth (6) are designed to be wider in the area of the base (39) than in the area of the tip (7).

7. The pipe connecting device according to any one of claims 1 to 6, **characterized in that** a securing element is provided an each member of the pipe connecting device.

8. The pipe connecting device according to any one of claims 1 to 7, **characterized in that** the securing element is made in one piece preferably from metal and is in particular formed from corrosion-resistant, hardenable and/or hardened steel.

9. The pipe connecting device according to any one of the claims 1 to 8, **characterized in that** prongs (43), apexes (45) and/or cutting blades (44) are provided in particular in the area of the tips of the teeth, wherein the cutting blades (44), the apexes (45) and/or the prongs (43) rise up from a tooth flank towards the insertion end (1) and they protrude over the tip (7) of the respective tooth in the direction towards the insertion end (1).

10. The pipe connecting device according to claim 9, **characterized in that** the prongs (43) and the apexes (45) are designed to be substantially pointed, for example conical or pyramidal.

11. The pipe connecting device according to any one of the claims 1 to 10, **characterized in that** projections (42) pointing towards the member (3) are provided on the contact surface (41) of the securing element (8).

12. The pipe connecting device according to claim 11, **characterized in that** the projections (42) are at least partially pressed or sunk into a portion of the member (3) in order to improve the frictional or positive connection between the member (3) of the clamping ring (4) and the securing element (8).

13. A **method for producing** a pipe connecting device according to any one of the preceding claims,
**characterized in that**
the securing element is produced by the following method steps:
- a mass, comprising at least metallic components, binding agents and plastic components, is inserted into a mold, preferably by injection molding,
- wherein the mold has a cavity corresponding to the negative form of the securing element to be produced with an excess,
- subsequently, the molded mass is removed from the mold,
- the binding agent is removed chemically, physically and/or thermally, and
- subsequently, the molded mass is debound, melted and/or sintered into a metallic body under the influence of heat.

14. The method according to claim 13, **characterized in that** the mass is processed into a metallic body near the melting point of the metal compound comprising the metal components.

15. The method according to claim 13 or 14, **characterized in that** for producing a securing element, the mold is parted along a mold parting line (34) and can be opened.

16. The method according to any one of claims 13 to 15, **characterized in that** for producing a securing element, the cavity of the mold is free from undercuts with respect to the mold parting line (34).

## Revendications

1. Dispositif de raccordement de tuyaux pour un raccordement étanche et anti-arrachement d'une extrémité mâle (1) avec un manchon (2), sachant que le dispositif de raccordement de tuyaux comprend une bague de serrage (4) essentiellement fermée qui présente un pourtour variable et est composée de plusieurs membres (3) disposés mobiles l'un par rapport à l'autre, qui sont mobiles en direction de l'extrémité mâle (1) par des moyens d'introduction de force (14) ou peuvent être appuyés contre l'extrémité mâle (1) par une force de serrage (S), sachant qu'un élément de fixation (8) est prévu sur au moins un membre, lequel présente des dents (5, 6) dirigées vers l'extrémité mâle (1) qui présentent chacune une base (39), un premier flanc de dent (10), un second flanc de dent (11) et une pointe (7),
**caractérisé en ce qu'**au moins une dent (5, 6) est conçue plus large au niveau de la base (39) qu'au niveau de la pointe (7) et présente une contre-dépouille (10), et que l'élément de fixation (8) présente au moins une dent principale (5) et au moins une dent secondaire (6), sachant que la dent principale (5) dépasse de la dent secondaire en direction de l'extrémité mâle (1).

2. Dispositif de raccordement de tuyaux selon la revendication 1, **caractérisé en ce que** l'élément de fixation (8) comprend un corps de base (9) duquel les dents (5, 6), en particulier une dent principale (5) et une dent secondaire (6), s'élèvent en direction de l'extrémité mâle (1) et que la dent principale (5) et la dent secondaire (6) sont reliées par le corps de base (9).

3. Dispositif de raccordement de tuyaux selon la revendication 2, **caractérisé en ce que** le corps de base (9) présente une forme traversante et/ou ininterrompue entre la dent principale (5) et la dent secondaire (6) qui est essentiellement libre d'ouvertures de passage et/ou de découpes.

4. Dispositif de raccordement de tuyaux selon l'une des revendications 1 à 3, **caractérisé en ce que** les dents (5, 6) présentent respectivement une pointe (7) qui est disposée pour permettre la pénétration dans l'extrémité mâle sous la force de serrage (S).

5. Dispositif de raccordement de tuyaux selon l'une des revendications 1 à 4, **caractérisé en ce que** la dent principale (5) est inclinée contre la force d'arrachement (A) et présente la contre-dépouille, sachant que la dent principale (5) présente un premier flanc de dent principale (10), dont l'angle (25) est de préférence inférieur à 90° ou que sur l'au moins une dent, la pointe (7) dépasse de la base (39) contre le sens d'arrachement (20).

6. Dispositif de raccordement de tuyaux selon l'une des revendications 1 à 5, **caractérisé en ce que** les dents (5, 6) présentent une section transversale essentiellement triangulaire qui est délimitée par la base, le premier flanc de dent, le second flanc de dent et la pointe, sachant que la dent principale (5) et la dent secondaire (6) sont conçues plus larges au niveau de la base (39) qu'au niveau de la pointe (7).

7. Dispositif de raccordement de tuyaux selon l'une des revendications 1 à 6, **caractérisé en ce qu'**un élément de fixation est prévu sur chaque membre du dispositif de raccordement de tuyaux.

8. Dispositif de raccordement de tuyaux selon l'une des revendications 1 à 7, **caractérisé en ce que** l'élément de fixation est conçu d'un seul tenant, de préférence en métal, et est fabriqué en particulier en acier inoxydable, pouvant être trempé et/ou trempé.

9. Dispositif de raccordement de tuyaux selon l'une des revendications 1 à 8, **caractérisé en ce que** des crans des pointes à bout conique (45) et/ou des lames (44) sont prévus sur les dents, en particulier au niveau des pointes des dents, sachant que les lames les pointes à bout conique (45) et/ou les crans (43) s'élèvent d'un flanc de dent en direction de l'extrémité mâle (1) et dépassent de la pointe (7) de la dent respective en direction de l'extrémité mâle (1).

10. Dispositif de raccordement de tuyaux selon la revendication 9, **caractérisé en ce que** les crans (43) et les pointes à bout conique (45) sont conçus essentiellement pointus, par exemple conique ou pyramidaux.

11. Dispositif de raccordement de tuyaux selon l'une des revendications 1 à 10, **caractérisé en ce que** des prolongements (42) dirigés en direction du membre (3) sont disposés sur la surface d'appui (41) de l'élément de fixation (8).

12. Dispositif de raccordement de tuyaux selon la revendication 11, **caractérisé en ce que** les prolongements (42) sont enfoncés ou ont des griffes pour améliorer l'insertion par friction ou complémentarité de forme entre le membre (3) de la bague de serrage (4) et l'élément de fixation (8) au moins partiellement dans une partie du membre (3).

13. Procédé de fabrication d'un dispositif de raccordement de tuyaux selon l'une des revendications précédentes, **caractérisé en ce que** l'élément de fixation est fabriqué par les étapes de procédé suivantes :
une masse, qui comprend au moins des composantes métalliques, des liants et des composantes plastiques, est insérée dans un moule, de préférence moulée par injection, sachant que le moule présente une cavité qui correspond à la forme négative de l'élément de fixation à fabriquer avec une surcote, puis la masse moulée est prélevée du moule, le liant est enlevé chimiquement, physiquement et/ou thermiquement et enfin, par action de la chaleur, la masse moulée est déliée, fondue et/ou frittée en un corps métallique.

14. Procédé selon la revendication 13, **caractérisé en ce que** la masse proche du point de fusion de la liaison métallique comprenant les composantes métalliques est usinée en un corps métallique.

15. Procédé selon la revendication 13 ou 14, **caractérisé en ce que** pour fabriquer un élément de fixation, le moule est séparé et peut être ouvert le long d'une ligne de séparation de moule (34).

16. Procédé selon l'une des revendications 13 à 15, **caractérisé en ce que** pour fabriquer un élément de fixation, la cavité du moule est libre de contre-dépouilles par rapport à la ligne de séparation de moule (34).
